# EUROPÄISCHE PATENTANMELDUNG

(11) **EP 1 231 576 A1**
(43) Veröffentlichungstag der Anmeldung: **14.08.2002**
(21) Anmeldenummer: 01102341.3
(22) Anmeldetag: 01.02.2001
(51) Int. Cl.: G07F 17/32, G06F 17/60

(54) **Bonus-Spielsystem für eine Vielzahl von Benutzern**

(71) Anmelder: Shopping-Promotion-Systems International Holding Ltd., Jersey JE4 5RP, Channel Islands (GB)
(72) Erfinder: Geier, Erich, 86947 Geretshausen (DE); Ritter, Manfred c/o Geier, 86947 Geretshausen (DE); Kothmeier, Gerhard c/o Geier, 86947 Geretshausen (DE)
(74) Vertreter: König, Beate, Dipl.-Phys. Dr.

(57) **Zusammenfassung**

Die Erfindung betrifft ein Spielsystem für eine Vielzahl von Benutzern, denen jeweils Benutzerkenndaten zugeordnet sind. Es ist mindestens eine dezentrale Station (40) vorgesehen, der Stationskenndaten zugeordnet sind und in der der Benutzer einen Produkt- oder Dienstleistungsumsatz erzielt. Abhängig von dem Betrag dieses Umsatzes wird von der dezentralen Station (40) ein Spieleinsatz für den Benutzer bereitgestellt, der in Form von Spieleinsatzdaten, kombiniert mit Stationskenndaten und Benutzerkenndaten einen Datensatz zur Übertragung an einen Zentralrechner (20) darstellt. Der Zentralrechner (20) ist mit der mindestens einen dezentralen Station (40) sowie einem Endgerät (60) verbunden, über das der Benutzer eine Spielanforderung an den Zentralrechner (20) abgibt. Der Zentralrechner (20) prüft Freigabebedingungen für den Spielbetrieb, steuert diesen und liefert nach Vorgabe die Gewinndaten, die in der dezentralen Station (40) verarbeitet und dem Benutzer gutgeschrieben werden.

## Beschreibung

Die Erfindung betrifft ein Spielsystem für eine Vielzahl von Benutzern, umfassend mindestens ein Endgerät mit einer Spielund Gewinnanzeige, einen Zentralrechner, eine Einrichtung zum Übertragen von Datensätzen vom Endgerät zum Zentralrechner, wobei der Zentralrechner eine Einrichtung zur Verarbeitung und Auswertung von Spieldaten von Benutzern, einen Speicher für Spiel- und Spielprogrammdaten und eine Steuereinheit zur Prüfung und Freigabe einer Spielanforderung aufweist.

Aus der WO 9600427 A ist ein System zum bargeldlosen Spielen an geldbetätigten Unterhaltungsgeräten mit einer Anzahl von mit einer Benutzerkarten-Lese/Schreibeinrichtung versehenen Unterhaltungsgeräten bekannt, wobei die Unterhaltungsgeräte eine Prüfeinrichtung für die Benutzerkarten und einen Speicher aufweisen. Mit den Unterhaltungsgeräten ist ein Zentralrechner verbunden, der eine Benutzerkarten-Lese/Schreibeinrichtung, eine Einrichtung zum Prüfen eingelesener Benutzerkarten, einen Speicher, eine Einrichtung zur Freigabe von Benutzerkarten für die Benutzung der Unterhaltungsgeräte des Systems und eine Einrichtung zur Verarbeitung von Spielerdaten aufweist. Als Benutzerkarten sind handelsübliche Kreditkarten vorgesehen. Der Zentralrechner ist über eine Datenfernübertragungsleitung mit einem Kreditkarten-Bankterminal verbunden und führt die Auf/Abbuchung des Kartenkontos durch. Ferner ist vorgesehen, daß die Unterhaltungsgeräte jeweils einen Guthabenspeicher während der Nutzungsdauer des Unterhaltungsgeräts durch den jeweiligen Karteninhaber aufweisen.

Für die Datenübertragung bei einem System von Unterhaltungsgeräten ist gemäß US 5 179 517 A eine Datenübertragungskarte mit Speicher, Adressier-, Steuer- und Schutzschaltungsanordnung entwickelt worden. Die Karte kann je nach den Erfordernissen mit einem Mikroprozessor und einer Datenverschlüsselungseinheit versehen sein. Diese Karteneinheit wird eingesetzt, um Umsatzdaten der einzelnen Unterhaltungsgeräte, Verletzungen von Sicherheitseinrichtungen, Funktionsausfälle, einzelnen Spielern zugeordnete Spielumsätze, etc. zu übertragen. Die übertragenen Daten werden in einem Überwachungsrechner ausgewertet, wobei auch aufgrund der Datenauswertung eine Spielfreigabe für einen mit Kreditkarte, etc. spielenden Spieler erfolgen kann.

Bei einer in der US 4 869 500 A beschriebenen Kombination aus einem Verkaufsautomaten und einem Unterhaltungsgerät sind ein Verkaufsteil, ein Spielteil und ein Kreditteil vorgesehen. Im Verkaufsteil sind zum Verkauf angebotene Gegenstände ausgestellt und ausgebbar abhängig von dem Eingang eines entsprechenden Betrags im Kreditteil. Der Spielteil wird ansprechend auf den Empfang eines vorbestimmten Kreditwerts aus dem Kreditteil aktiviert und kann manuell betätigt werden, das heißt, der Spielbetrieb ist fakultativ. Es ist auch möglich, den Spielbetrieb völlig vom Verkaufsteil zu entkoppeln. Hingegen kann der Spielgewinn auch dazu verwendet werden, einen Kauf zu einem entsprechend reduzierten Preis zu tätigen.

In der US 5 890 718 A ist ein Selbstbedienungstanksystem mit Spielfunktion beschrieben. Die Kraftstoffkäufer sollen durch das Spielen mit elektronischen Spielen dazu animiert werden, mehr Kraftstoff zu tanken, wobei ihnen Prämien entsprechend den Spielergebnissen angeboten werden. Das System umfaßt eine Anzahl von Zapfsäulen, eine Steuereinheit zur Steuerung und Kontrolle sämtlicher Zapfsäulen sowie eine Anzahl von Spieleinrichtungen, die in den Zapfsäulen eingebaut sind und mit einer Eingabeeinheit und Tastatur versehen sind. Weiter vorgesehen ist eine Steuereinheit zur Steuerung und Kontrolle sämtlicher Spieleinrichtungen. Abhängig von Tanken einer bestimmten Kraftstoffmenge wird dann von der Steuereinheit der betreffenden Zapfsäule ein Spielauftrag an die zugeordnete Spieleinrichtung gegeben, so daß eine Spielrunde gespielt werden kann. Hierbei ist vorgesehen, daß der Spieler auch einen Preis gemäß der Spielanzeige gewinnen kann.

Der Erfindung liegt die Aufgabe zugrunde, ein Spielsystem, zu schaffen, das einen hohen Spielanreiz bietet und zugleich als Promotionmaßnahme in Geschäfts-, Vertriebs- und Dienstleistungsunternehmen eingesetzt werden kann.

Diese Aufgabe ist erfindungsgemäß bei einem Spielsystem mit den Merkmalen des Anspruchs 1 gelöst. Vorteilhafte Weiterbildungen des erfindungsgemäßen Spielsystems sind Gegenstand der abhängigen Ansprüche.

Gemäß der Erfindung ist somit ein Spielsystem für eine Anzahl von Benutzern, nämlich Kunden und potentiellen Spielern, vorgesehen, denen jeweils Benutzerkenndaten zugeordnet sind. Es ist mindestens eine dezentrale Station vorhanden, der Stationskenndaten zugeordnet sind und in der der Benutzer einen Produkt- oder Dienstleistungsumsatz erzielt. Eine solche dezentrale Station ist beispielsweise ein Geschäft, bei dem der Benutzer des Spielsystems Kunde ist. Die dezentrale Station umfaßt eine Einrichtung zum Eingeben von Benutzerkenndaten und eine Einrichtung, die automatisch oder auf Anforderung des Benutzers den Benutzerkenndaten Spieleinsatzdaten zuordnet und/oder bereitstellt. Der Betragswert der Spieleinsatzdaten entspricht dem durch den Benutzer erzielten, für den Spieleinsatz verfügbaren Umsatzbetrag der dezentralen Station. Weiter umfaßt die dezentrale Station eine Einrichtung zur Verarbeitung von dem Benutzer zugeordneten Spielgewinndaten.

Im Spielsystem vorhanden sind weiter mindestens ein Endgerät mit einer Einrichtung zum Eingeben von Benutzerkenndaten, einer Anzeige und einer Eingabeeinheit sowie ein Zentralrechner, der mit der mindestens einen dezentralen Station und mit dem mindestens einen Endgerät verbunden ist. Es ist eine Einrichtung zum Übertragen von Sätzen von Stationskenndaten, Benutzerkenndaten und Spieleinsatzdaten unter Verwendung des Endgeräts zum Zentralrechner vorgesehen.

Der Zentralrechner umfaßt eine Einrichtung zum Einlesen und Prüfen von Stationskenndaten, Benutzerkenndaten und/oder Spieleinsatzdaten der entsprechenden Benutzer, eine Einrichtung zur Verarbeitung einer Spielanforderung eines Benutzers und zur Spielfreigabe an den Benutzer, eine Einrichtung zur Verarbeitung und Auswertung von Spieldaten von Benutzern, einen Speicher und eine Einrichtung zur Ausgabe von Spielgewinndaten von Benutzern an die betreffende dezentrale Station. Im Speicher des Zentralrechners sind Stationskenndaten, Benutzerkenndaten, Spieleinsatzdaten von Benutzern und ferner Spielprogrammdaten von Unterhaltungsspielen mit Gewinnmöglichkeit gespeichert. Weiter ist im Zentralrechner eine Steuereinheit vorgesehen, die bei Eingang einer Spielanforderung eines Benutzers den aktuellen Wert von dessen Spieleinsatzdaten für die betreffende dezentrale Station prüft und bei Erfüllen einer vorgegebenen Freigabebedingung das Abspielen eines Spielprogramms auf die Anforderung des Benutzers freigibt, wobei der Spielgewinn als Spielgewinndaten den Benutzerkenndaten und Stationskenndaten zugeordnet ist. Die Spiel- und Gewinnanzeige ist auf der Anzeige des Endgeräts vorgesehen.

Die Funktion und Arbeitsweise des erfindungsgemäßen Spielsystems werden im folgenden näher erläutert. Es wird hierbei zunächst von einer dezentralen Station, beispielsweise einem Geschäft, ausgegangen, wobei jedoch die dezentrale Station ebenso beispielsweise ein großes Freizeitzentrum, ein Möbelhaus oder eine Fahrzeugvermietungsfirma sein kann. Der hier als Benutzer bezeichnete Kunde erzielt in der betreffenden dezentralen Station einen Produkt- oder Dienstleistungsumsatz. Die dezentrale Station erfaßt Benutzerkenndaten für ihre Kundenunterlagen. Sie gewährt ihren Kunden einen Preisnachlaß, allerdings nicht automatisch. Vielmehr wird der Preisnachlaß auf Wunsch des Kunden gewährt, der hierzu einen Antrag beim Betreiber des Zentralrechners und/oder der dezentralen Station stellen muß. Bei Bearbeitung des Antrags werden dem Benutzer die bereits erwähnten Benutzerkenndaten zugeordnet, wobei diesen Benutzerkenndaten zusätzlich die Stationskenndaten zugeordnet sind. Ein dem Benutzer bzw. Kunden somit gewährter Preiserlaß aufgrund eines in der dezentralen Station erzielten Umsatzes kann auf diese Weise der Station mit für diese entsprechenden Kostenfolgen zugeordnet werden.

Wünscht nun der Kunde, d.h. Benutzer des erfindungsgemäßen Spielsystems, beim nächsten Einkauf oder Besuch der dezentralen Station den ihm gewährten möglichen Preisnachlaß in Anspruch zu nehmen, so kann dies entweder automatisch von der Station ausgeführt werden oder der Benutzer fordert es in der dezentralen Station an. Auch kann es sein, daß dem Benutzer bzw. dessen Kenndaten Spieleinsatzdaten zugeordnet werden, aber zu diesem Zeitpunkt noch nicht für einen Spieldurchlauf bereitgestellt werden sollen. In diesem Fall fordert der Kunde keinen Spiellauf an, und sein für den Spielbetrieb vorhandenes Umsatzguthaben erhöht sich. Voraussetzung für die Durchführung eines Spiellaufs ist indessen, daß nach den Vorgaben der dezentralen Station ein für den Spieleinsatz vorgesehener Umsatzbetrag auch vorhanden ist, beispielsweise etwa der Betrag einer Rechnung oder Quittung einen bestimmten Mindesteinkaufsbetrag überschreitet, damit den Verwaltungs- und Betriebskosten des Spielsystems Rechnung getragen wird.

Sind die für einen Spieldurchlauf erforderlichen Spieleinsatzdaten vorhanden und für den Benutzer bereitgestellt worden, so kann dieser nun das Endgerät benutzen, das beispielsweise mit der Einrichtung der dezentralen Station verbunden ist, die die Spieleinsatzdaten dem Benutzer zuordnet und/oder bereitstellt. Es kann sich um ein Terminal der Rechneranlage der dezentralen Station, um einen Personalcomputer, um ein spezielles Systemendgerät, etc. handeln. Das Endgerät kann in den Geschäftsräumen der dezentralen Station stehen oder der Benutzer identifiziert sich beim Endgerät durch Eingabe seiner Benutzerkenndaten, woraufhin schon ein Spieldurchlauf beginnen kann. Es ist auch möglich, hierzu das Drücken einer speziellen Starttaste, eine Berührung des Bildschirms (falls dieser ein Touch-Screen ist) oder weitere Eingabetätigkeiten vorzusehen. Es kann auch vorgesehen sein, nur für einen bestimmten Zeitraum einen Abruf der Spieleinsatzdaten zur Spielaktivierung zuzulassen. Beispielsweise kann die Durchführung eines Spiellaufs nur für den tag des Einkaufs oder innerhalb der nächsten sieben Tage vorgesehen sein. Mit der durch den Benutzer vorgenommenen Spielaktivierung am Endgerät erfolgt eine entsprechende Informationsweiterleitung (Benutzerkenndaten, Stationskenndaten, Spieleinsatzdaten) an den Zentralrechner, mit dem das Endgerät verbunden ist. Der Zentralrechner prüft die übermittelten Daten und mit dem Spielablauf erfolgt eine entsprechende Gewinnzuordnung zum Benutzer bzw. Spieler. Im vorliegenden Fall wird ein Roulette-Spiel betrachtet, wobei jedoch auch andere Spiele mit Spielmöglichkeit ausgeführt werden können. Der Spielablauf erfolgt in einer für Unterhaltungsgeräte üblichen Weise.

Bei einer Variante des erfindungsgemäßen Spielsystems ist es vorgesehen, 80% der gespielten Spiele mit einem Gewinn auszustatten. 20 von 100 gespielten Spielen bleiben somit ohne Gewinn. Der maximale Spielgewinn beträgt 10% des Benutzerumsatzes bzw. beispielsweise des Rechnungsbetrages. Die Gewinnanteile auf die 80 Gewinnspiele verteilen sich wie folgt: 20 Spiele sind mit einem Gewinn von 2,5%, 15 mit einem Gewinn von 0,5%, 10 Spiele mit einem Gewinn von 8,5% und 5 Spiele mit einem Gewinn von 10% des Umsatz- bzw. Rechnungsbetrages ausgestattet. Die verbleibenden 30 Spiele erhalten als Ergebnis ein Joker-Los für ein spezielles Gewinnspiel, bei dem es sich beispielsweise um eine Gewinnverlosung handeln kann, bei der die gezogenen Gewinne beispielsweise ein hoher Geldbetrag, etwa eine 1,0 Million DM, Häuser, Wohnungen, Geldbeträge, Reisen, Kraftfahrzeuge, etc. sein können. Mehr im einzelnen erfolgt bei Gewinn eines Joker-Loses die Übertragung der Benutzerkenndaten zu einem Speicherbereich des Zentralrechners, in dem die Verlosungsteilnehmer für die nächste Gewinnziehung abgelegt sind. Zweckmäßig erfolgt die Gewinnziehung rechnergesteuert, also mit Zufallsgenerator. Diese Gewinnaufschlüsselung kann selbstverständlich variieren, wobei sie jedoch bei Ausführung des Spiels ebenso wie der Spielablauf den gesetzlichen Vorschriften entsprechen muß.

Es kann unter Umständen auch vorgesehen sein, einen Spielvorgang interaktiv auszugestalten, das heißt der Spieler kann unter Umständen auch Sonderspiele oder Spielvarianten auswählen, sofern dies im Spielprogramm vorgesehen ist. Es ist auch möglich, das Spielprogramm fest im Endgerät abzuspeichern, so daß der Programmstart und/oder die Übermittlung des Spielergebnisses, d.h. der Spieldaten, lediglich an den Zentralrechner erfolgen.

Eine sehr praxisfreundliche Ausführung des erfindungsgemäßen Spielsystems zeichnet sich dadurch aus, daß Benutzerkarten mit mindestens einem les- und beschreibbaren Speicher vorgesehen sind, auf denen jeweils die Benutzerkenndaten, bedarfsweise weitere Benutzerdaten und Stationskenndaten der mindestens einen dezentralen Station gespeichert sind. Die betreffende dezentrale Station, jedenfalls zumindest eine der dezentralen Stationen, weist eine Benutzerkarten-Lese/Schreibeinrichtung auf und mindestens ein Endgerät, eine Benutzerkarten-Leseeinrichtung und bedarfsweise eine Benutzerkarten-Schreibeinrichtung auf. Damit kann dann der Benutzer bzw. Kunde in der dezentralen Station die Benutzerkarte vorlegen und der Spieleinsatz kann auf der Benutzerkarte gespeichert werden. Am Endgerät gibt dann der Benutzer wieder die Benutzerkarte ein, so daß an dieser Stelle die Benutzerkenndaten, Stationskenndaten und der Spieleinsatz gelesen und an den Zentralrechner übermittelt werden. Eine Schreibeinrichtung ist für die Benutzerkarte vorgesehen, wenn der Gewinn wieder auf der Benutzerkarte vermerkt werden soll. Bei dem nächsten Kaufvorgang wird dann die Benutzerkarte mit dem auf dieser vermerkten Gewinn bei der dezentralen Station vorgelegt und beim nächsten Kaufvorgang dann ein entsprechender Betrag gutgeschrieben, d.h. Preisnachlaß gewährt.

Es kann auch vorgesehen sein, daß das mindestens eine oder wenigstens eines der Endgeräte eine Ausgabevorrichtung aufweist, die Spieldaten, insbesondere Spielgewinne, ausgibt. Bei dieser Ausgabeeinrichtung kann es sich um einen Drucker handeln.

Vorzugsweise wird in einer dezentralen Station vorab ein Wert als Mindestwert für den Benutzerumsatz festgesetzt und die den Benutzerkenndaten, Spieleinsatzdaten zuordnende und/oder diese bereitstellende Einrichtung vergleicht dann den Betrag des Benutzerumsatzes mit dem vorab festgesetzten Wert und gibt Spieleinsatzdaten frei, wenn der Umsatzbetrag größer als der vorab festgesetzte Wert ist. Auf diese Weise kann dem zur Ermöglichung des Spielbetriebes benötigten Verwaltungsaufwand Rechnung getragen werden.

Bei einer Variante des erfindungsgemäßen Spielsystems ist vorgesehen, daß die die Spielgewinndaten verarbeitende Einrichtung der dezentralen Station auf Anforderung des Benutzers die Spielgewinndaten in eine Gutschrift zugunsten des Benutzers umwandelt oder wieder als Spieleinsatzdaten seinen Benutzerkenndaten zuordnet. Durch eine solche Ausgestaltung des Spielablaufs wird für den Benutzer bzw. Spieler ein erhöhter Spielanreiz geschaffen.

Es kann für den Spielgewinnabruf bzw. die Verfügung über den Spielgewinn beispielsweise als Gutschrift zugunsten des Benutzers ein maximaler Zeitraum vorgesehen sein, z.B. drei Monate.

Bei einer anderen vorteilhaften Ausführungsvariante des erfindungsgemäßen Spielsystems wird dieses im Internet realisiert. Hier wird in der Regel das Endgerät der Rechner eines Benutzers oder ein an anderem Ort stehender Rechner sein, der von dem Benutzer bedient wird. Eine Anmeldung des Benutzers erfolgt on-line über die Homepage der Betreibergesellschaft des Zentralrechners, wobei der Benutzer dann wiederum Benutzerkenndaten erhält, etwa eine Identitätsnummer festgelegt wird und eine Pin-Nummer vergeben wird. Erzielt der Benutzer bei einer dezentralen Station, etwa einem Versandhaus, als dezentraler Station, einen Umsatz, so kann er dann über die Homepage der dezentralen Station eine entsprechende Seite oder einen entsprechenden Bereich aufrufen, der für Benutzer des Spielsystems vorgesehen ist, und beispielsweise eine Rechnungsnummer zur Identifizierung des von ihm bewirkten Umsatzes und zum Abruf von Spieleinsatzdaten eingeben. Alternativ ist es auch möglich, daß durch diese Identifizierung des Benutzers ein Abruf bereits bereitgestellter Benutzerumsatzdaten der dezentralen Station an den Zentralrechner erfolgt und die Daten dorthin überspielt werden. Ein erzielter Gewinnbetrag kann dann bei der nächsten Rechnungstellung zum Abzug gebracht werden, und ein etwa gewonnenes Joker-Los wird automatisch für die nächste Gewinnverlosung digital abgespeichert.

Zweckmäßig ist der Zentralrechner über eine Datenfernübertragungsleitung mit dem Rechner der dezentralen Station verbunden.

Wie sich aus Obenstehendem ergibt, besteht für den Benutzer des Spielsystems, das heißt den Kunden und späteren Spieler, kein Erfordernis, einen Geldbetrag extra für einen Spiellauf aufzuwenden. Sein Einsatz besteht in der Inanspruchnahme eines ihm für den Spielvorgang von der dezentralen Station zur Verfügung gestellten Gebührenerlasses, von dem er sonst nicht profitieren würde. Ansonsten führt er seine üblichen geschäftlichen Transaktionen durch, etwa eine Bestellung oder einen Kauf eines Gegenstandes oder er nimmt eine angebotene Dienstleistung in Anspruch. Demgegenüber bestehen für den Benutzer bzw. Kunden nicht unerhebliche Gewinnchancen, und der Spielanreiz besteht schon allein darin, daß für 80% der gespielten Spiele ein Gewinn oder eine Gewinnaussicht in Form eines Gewinnloses vorgesehen ist.

Eine weitere Attraktion bietet auch die Möglichkeit, daß der Benutzer bzw. Spieler eine Spielanzeige und das Spielergebnis am Endgerät beobachten kann.

Für die dezentrale Station bzw. deren Inhaber besteht ebenfalls ein Anreiz zur Teilnahme am erfindungsgemäßen Spielsystem. Der Einsatz, der von der dezentralen Station geleistet wird, besteht im wesentlichen in der Zurverfügungstellung einer Gebührenermäßigung, praktisch eines Rabatts, wobei noch Benutzungsgebühren für das System, Geräte, etc. anfallen.

Der mathematisch ermittelbare durchschnittliche Gewinnbetrag von 100 gespielten Spielen beträgt bei einer Ausführungsform des erfindungsgemäßen Spielsystems beispielsweise 2,5% des Benutzer- bzw. Kundenumsatzes.

Die obenstehend genannten Zahlen für Gewinnanteile und Kostenermäßigungen sind lediglich beispielhaft und es können selbstverständlich auch andere Zahlen eingesetzt werden, sofern sie den gesetzlichen Auflagen entsprechen.

Wie sich aus obiger Darstellung ergibt, wird das erfindungsgemäße Spielsystem in der Regel mehrere dezentrale Stationen umfassen. Will ein Benutzer des Spielsystems dieses auch in einer zweiten oder weiteren Station nutzen, so geht er im wesentlichen wie bei der ersten Station vor. Seine Daten (Kenndaten, Spieleinsatzdaten, Gewinndaten) werden jeweils der dezentralen Station zugeordnet erfaßt und verwaltet, auf deren Kundenumsatz sie beruhen. Die Ermäßigung aufgrund eines Gewinns kann auch nur dort erlangt werden. Die Benutzerkarte kann für alle dezentralen Staticnen benutzt werden. Es werden dann dort entsprechend mehr Datensätze gespeichert.

Die Erfindung wird im folgenden anhand von zwei Ausführungsbeispielen und der Zeichnung weiter erläutert. Diese Darstellung soll lediglich zu Veranschaulichungszwecken dienen und die Erfindung nicht auf die hier konkret beschriebenen Merkmale beschränken, sondern vielmehr ist die Erfindung durch den Schutzumfang gemäß beigefügten Ansprüchen definiert. In der Zeichnung zeigen:
- Fig. 1: eine schematische Darstellung einer ersten Variante des erfindungsgemäßen Spielsystems mit mobilem Datenträger,
- Fig. 2: eine schematische Darstellung einer zweiten Variante des erfindungsgemäßen Spielsystems für den Einsatz im Internet und
- Fig. 3: eine schematische Veranschaulichung des erfindungsgemäßen Spielsystems, die mehrere dezentrale Stationen zeigt.

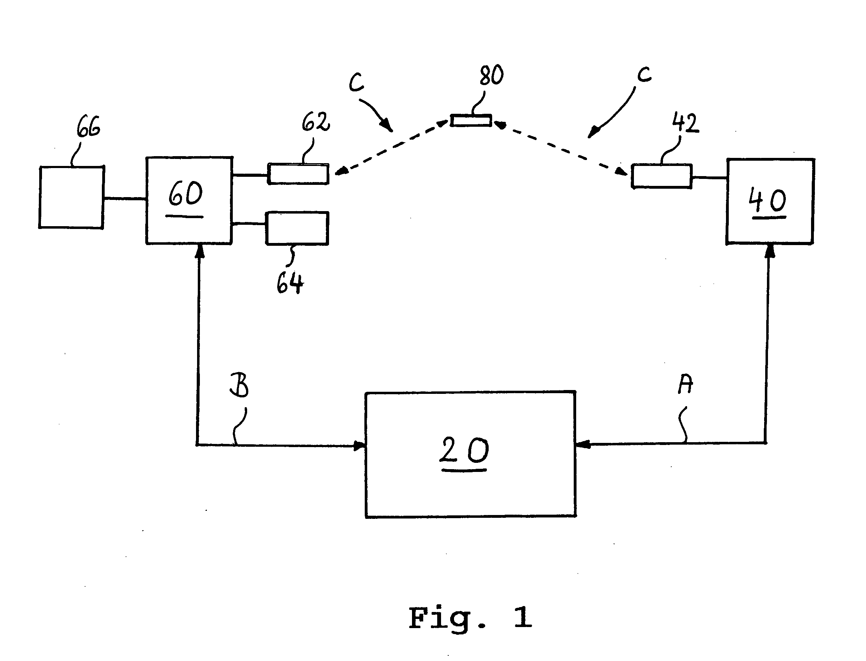

Es wird zunächst anhand von Fig. 1 eine erste Variante des erfindungsgemäßen Spielsystems erläutert. Ein Zentralrechner 20 ist mit einer dezentralen Station 40 über eine Verbindungsleitung A verbunden. Die dezentrale Station 40 weist eine Kartenlese/Schreibeinheit 42 auf, über die Benutzern dieser dezentralen Station zugeordnete Daten eingegeben und ausgegeben werden können. Im veranschaulichten Ausführungsbeispiel handelt es sich bei der Lese/Schreibeinheit 42 um einen Chipkartenleser/Schreiber. Ebenfalls mit dem Zentralrechner 20 über eine Leitung B verbunden ist ein Endgerät 60, bei dem es sich beispielsweise um einen Rechner handeln kann und das ebenfalls einen Chipkartenleser/Schreiber 62 für Benutzern zugeordnete Daten, ferner eine Eingabeeinheit 64 und eine Anzeige 66 aufweist. Für die Übertragung von Daten zwischen der dezentralen Station 40 und dem Endgerät 60 ist eine Chipkarte 80 vorgesehen. Die Verbindung ist durch Pfeile C angedeutet.

Das in Fig. 1 veranschaulichte Spielsystem arbeitet wie folgt. In der dezentralen Station 40, von der es selbstverständlich mehrere geben kann, die jeweils mit dem Zentralrechner 20 verbunden sind, erzielt ein Benutzer bzw. Kunde einen Umsatz in bestimmter Höhe. Statt dem Kunden einen Rabatt zu gewähren, stellt die dezentrale Station 40 dem Kunden Spieleinsatzdaten zur Verfügung, deren Betrag oder Höhe dem vom Benutzer in dieser dezentralen Station erzielten Umsatzbetrag entspricht und zugleich eine bestimmte Höhe übersteigt, die als Mindesteinsatz festgesetzt ist. Sofern der Benutzer den Spieleinsatz nutzen möchte, werden auf Anforderung Spieleinsatzdaten, einschließlich Stationskenndaten und Benutzungskenndaten auf eine Benutzerkarte 80 geschrieben, die dieser in den Chipkartenleser/Schreiber eingeführt hat. Nach dem Schreibvorgang nimmt der Benutzer die Chipkarte 80 und legt diese zu einem späteren Zeitpunkt, beispielsweise aber auch unmittelbar nach der Tätigung seines Einkaufs in einen Chipkartenleser/Schreiber 62 eines Endgeräts 60, das sich noch in den Räumen der dezentralen Station 40 befinden kann. Das Endgerät 60 ist mit einer Anzeige 66, ferner mit einer Eingabeeinheit 64 ausgestattet. Es kann vorgesehen sein, daß das Endgerät 60 mit Einführen der Chipkarte 80 in den Chipkartenleser/Schreiber 62 bereits den Spielbetrieb aufnimmt, wobei zunächst die auf der Chipkarte 80 gespeicherten Daten gelesen und über die Verbindungsleitung B an den Zentralrechner 20 übertragen werden. Dort werden die Stationskenndaten, Benutzerkenndaten und Spieleinsatzdaten geprüft und bei Erfüllung einer vorher festgelegten Freigabebedingung wird der Spielbetrieb aufgenommen, ohne daß an der Eingabeeinheit 64 ein entsprechendes Startsignal gegeben werden muß. Der Spielverlauf und die Anzeige des Spielgewinns werden auf der Anzeige 66 angezeigt. Weiter wird der Spielgewinn dann wieder über den Chipkartenleser/Schreiber auf die Chipkarte 80 geschrieben. Der Benutzer geht dann wiederum zu einem späteren Zeitpunkt zum Chipkartenleser/Schreiber 42 der dezentralen Station und führt dort wiederum die Chipkarte 80 mit dem aufgezeichneten Spielgewinn ein, woraufhin eine entsprechende Gutschrift in der dezentralen Station 40 registriert wird. Es kann auch vorgesehen sein, daß die Chipkarte 80 erst bei Tätigung eines neuen Kaufs beschrieben wird, das heißt, eine Aktualisierung des Spieleinsatzguthabens des Benutzers erst direkt gekoppelt mit einem Kauf bzw. einem Zahlvorgang vorgenommen wird. Eine Einlösung des Spielgewinns an einer anderen dezentralen Station als der dezentralen Station 40 ist nicht möglich, da die Spieldaten stets mit den Stationskenndaten gekoppelt sind.

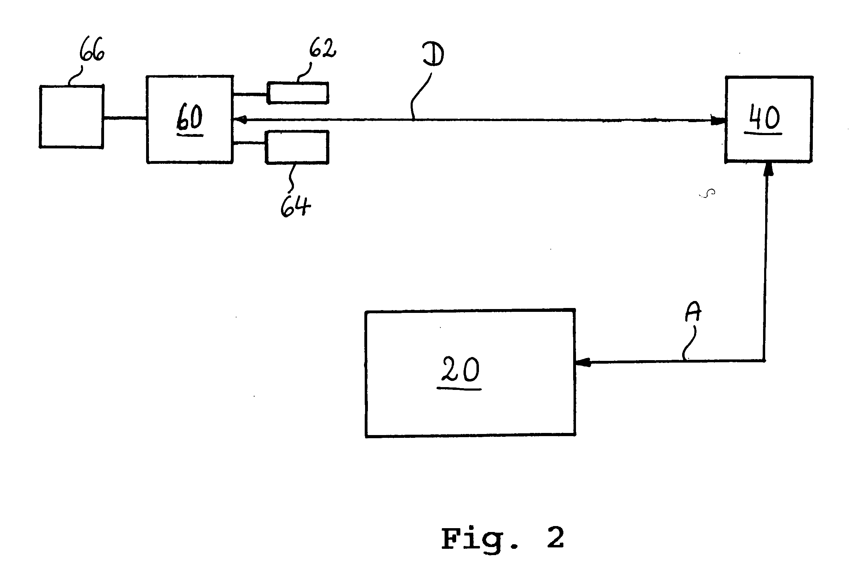

Fig. 2 zeigt eine zweite Variante des erfindungsgemäßen Spielsystems, die für den Internet-Betrieb ausgeführt ist. Es ist wiederum ein Zentralrechner 20 vorgesehen, der über eine Verbindungsleitung A mit mindestens einer dezentralen Station 40 verbunden ist. Der Benutzer erzielt wiederum in der dezentralen Station 40 einen Umsatz, dessen Betrag in verfügbarer Höhe in einen Spieleinsatz mit entsprechendem Betragswert umgewandelt wird. Die dezentrale Station 40 ist über eine Verbindungsleitung D mit einem Endgerät 60 verbunden, das fakultativ einen Chipkartenleser/Schreiber 62, ferner eine Eingabeeinheit 64 und eine Anzeige 66 aufweist.

Die Funktion dieses Spielsystems ist wie folgt. Der Benutzer bzw. Kunde erzeugt einen Umsatz in der dezentralen Station 40 und die hieraus resultierenden, zur Verfügung gestellten Spieleinsatzdaten werden auf Anforderung des Benutzers zum Zentralrechner 20 übertragen. Der Spielstart erfolgt dabei beispielsweise durch Eingabe über die Einabeeinheit 64, womit eine Verbindung zwischen der dezentralen Einheit 40 bzw. deren nicht dargestelltem Rechner und dem Zentralrechner 20 hergestellt wird. Benutzerkenndaten und Stationskenndaten werden zusammen mit den Spieleinsatzdaten wie erwähnt zum Zentralrechner 20 übertragen. Damit kann bereits ein Spiellauf ausgelöst werden, sofern die Freigabebedingungen für das Spiel erfüllt sind. Ein erzielter Spielgewinn wird im Speicher des Zentralrechners 20 gespeichert und kann beim Endgerät 60 bei Tätigung einer Transaktion zur Gutschrift bei der dezentralen Station 40 abgerufen werden.

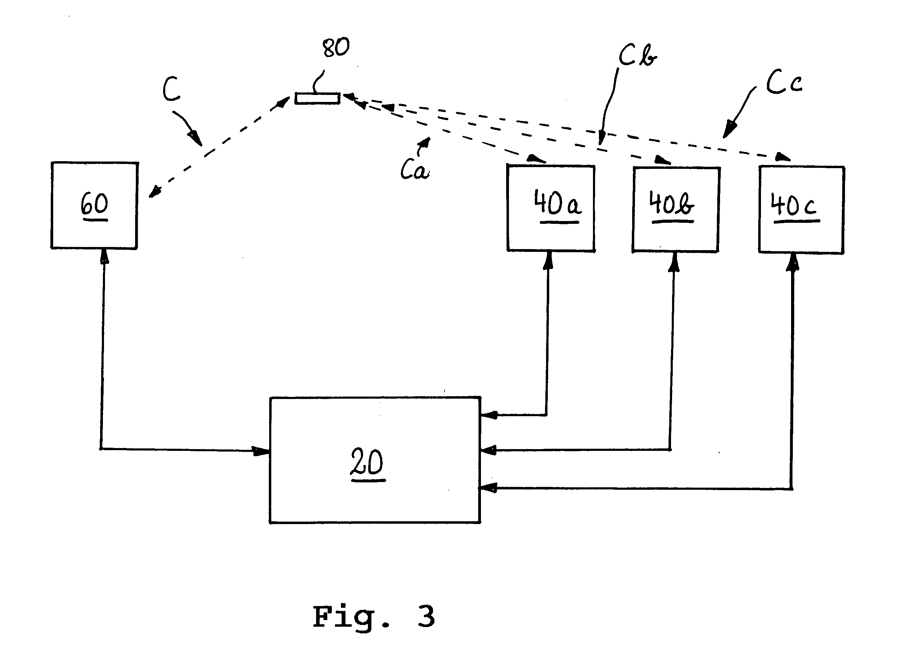

Fig. 3 veranschaulicht die Systemanordnung für mehrere dezentrale Stationen, hier 3 dezentrale Stationen 40a, 40b, 40c. Diese sind wie das hier nur an einem Beispiel gezeigte Endgerät 60 mit Chipkartenlesern/Schreibern ausgestattet. Auf der Chipkarte 80 können mehrere Sätze von Stationskenndaten, Benutzerkenndaten und Spieleinsatzdaten zugleich gespeichert sein. Sie werden jeweils einzeln pro dezentraler Station im Zentralrechner 20 verarbeitet.

## Patentansprüche

1. Spielsystem für eine Vielzahl von Benutzern, denen jeweils Benutzerkenndaten zugeordnet sind, umfassend
mindestens eine dezentrale Station (40), der Stationskenndaten zugeordnet sind und in der der Benutzer einen Produktoder Dienstleistungsumsatz erzielt, die eine Einrichtung (42) zum Eingeben von Benutzerkenndaten und eine Einrichtung umfaßt, die automatisch oder auf Anforderung des Benutzers den Benutzerkenndaten Spieleinsatzdaten zuordnet und/oder bereitstellt, deren Betragswert dem durch den Benutzer erzielten, für den Spieleinsatz verfügbaren Umsatzbetrag der dezentralen Station entspricht, und die außerdem eine Einrichtung zur Verarbeitung von dem Benutzer zugeordneten Spielgewinndaten umfaßt,
mindestens ein Endgerät (60) mit einer Einrichtung (62) zum Eingeben von Benutzerkenndaten, einer Anzeige (66) und einer Eingabeeinheit (64),
einen Zentralrechner (20), der mit der mindestens einen dezentralen Station (40) und mit dem mindestens einen Endgerät (60) verbunden ist,
einer Einrichtung (80) zum Übertragen von Sätzen von Stationskenndaten, Benutzerkenndaten und Spieleinsatzdaten unter Verwendung des Endgeräts (60) zum Zentralrechner (20),
wobei der Zentralrechner (20) eine Einrichtung zum Einlesen und Prüfen von Stationskenndaten, Benutzerkenndaten und/oder Spieleinsatzdaten der entsprechenden Benutzer, eine Einrichtung zur Verarbeitung einer Spielanforderung eines Benutzers und zur Spielfreigabe an den Benutzer, eine Einrichtung zur Verarbeitung und Auswertung von Spieldaten von Benutzern, einen Speicher und eine Einrichtung zur Ausgabe von Spielgewinndaten von Benutzern an die betreffende dezentrale Station umfaßt,
wobei in dem Speicher des Zentralrechners (20) Stationskenndaten, Benutzerkenndaten, Spieleinsatzdaten von Benutzern und ferner Spielprogrammdaten von Unterhaltungsspielen mit Gewinnmöglichkeit gespeichert sind,
wobei im Zentralrechner (20) eine Steuereinheit vorgesehen ist, die bei Eingang einer Spielanforderung eines Benutzers den aktuellen Wert von dessen Spieleinsatzdaten für die betreffende dezentrale Station (40) prüft und bei Erfüllen einer vorgegebenen Freigabebedingung das Abspielen eines Spielprogramms auf die Anforderung des Benutzers freigibt, wobei der Spielgewinn als Spielgewinndaten den Benutzerkenndaten und Stationskenndaten zugeordnet ist,
wobei die Spiel- und Gewinnanzeige auf der Anzeige (66) des Endgeräts (60) vorgesehen ist.

2. Spielsystem nach Anspruch 1,
**dadurch gekennzeichnet, daß** Benutzerkarten (80) mit mindestens einem les- und beschreibbaren Speicher vorgesehen sind, auf denen jeweils die Benutzerkenndaten, bedarfsweise weitere Benutzerdaten und Stationskenndaten der mindestens einen dezentralen Station (40) gespeichert sind,
die mindestens eine oder wenigstens eine der dezentrale(n) Station(en) (40) eine Benutzerkarten-Lese/Schreibeinrichtung (42) aufweist,
das mindestens eine oder wenigstens eines der Endgerät(e) eine Benutzerkarten-Leseeinrichtung (62) und bedarfsweise eine Benutzerkarten-Schreibeinrichtung aufweist.

3. Spielsystem nach Anspruch 1, **dadurch gekennzeichnet, daß** das Endgerät mit der Einrichtung der dezentralen Station (40) verbunden ist, die die Spieleinsatzdaten dem Benutzer zuordnet und/oder bereitstellt.

4. Spielsystem nach Anspruch 2 oder 3, **dadurch gekennzeichnet, daß** das mindestens eine oder wenigstens eines der Endgerät(e) eine Ausgabeeinrichtung (62) aufweist, die Spieldaten, insbesondere Spielgewinne, ausgibt.

5. Spielsystem nach Anspruch 4, **dadurch gekennzeichnet, daß** die Ausgabeeinrichtung ein Drucker ist.

6. Spielsystem nach einem der Ansprüche 2 bis 5, **dadurch gekennzeichnet, daß** von der Ausgabeeinrichtung (62) die Spieldaten auf die Benutzerkarten (80) ausgegeben werden.

7. Spielsystem nach einem der Ansprüche 1 bis 6, **dadurch gekennzeichnet, daß** in der dezentralen Station (40) vorab ein Wert als Mindestwert für den Benutzerumsatz festgesetzt worden ist und die den Benutzerkenndaten Spieleinsatzdaten zuordnende und/oder diese bereitstellende Einrichtung den Betrag des Benutzerumsatzes mit dem vorab festgesetzten Wert vergleicht und Spieleinsatzdaten freigibt, wenn der Umsatzbetrag größer als der vorab festgesetzte Wert ist.

8. Spielsystem nach einem der Ansprüche 1 bis 7, **dadurch gekennzeichnet, daß** die die Spielgewinndaten verarbeitende Einrichtung der dezentralen Station auf Anforderung des Benutzers die Spielgewinndaten in eine Gutschrift zugunsten des Benutzers umwandelt oder wieder als Spieleinsatzdaten seinen Benutzerkenndaten zuordnet.

9. Spielsystem nach einem der Ansprüche 1 bis 8, **dadurch gekennzeichnet, daß** das Endgerät (60) ein Rechner ist und die dezentrale Station (40) einen Rechner aufweist, wobei eine Benutzeranforderung vom Endgerät an den Rechner der dezentralen Station übermittelt wird und über diesen die Benutzerkenndaten und Spieleinsatzdaten zum Zentralrechner (20) übertragen werden.

10. Spielsystem nach einem der Ansprüche 1 bis 9, **dadurch gekennzeichnet, daß** der Zentralrechner (20) über eine Datenfernübertragungsleitung (A) mit dem Rechner der dezentralen Station (40) verbunden ist.

11. Spielsystem nach einem der Ansprüche 1 bis 10, **dadurch gekennzeichnet, daß** das Unterhaltungsspiel ein Roulette-Spiel ist.
